# FASCICULE DE BREVET EUROPEEN

(11) **EP 2 893 853 B1**
(45) Date de publication et mention de la délivrance du brevet: **25.10.2017**
(21) Numéro de dépôt: 14197503.7
(22) Date de dépôt: 11.12.2014
(51) Int. Cl.: A47J 27/04, F24C 7/06, F24C 15/00

(54) **Appareil élèctrique de chauffage et/ou de cuisson d'aliments à la vapeur**
Elektrogerät zum Aufwärmen und/oder Kochen von Lebensmitteln mit Dampf
Electrical device for heating and/or cooking food with steam

(30) Priorité: 13.12.2013 FR 1362544
(43) Date de publication de la demande: 15.07.2015
(73) Titulaire: SEB S.A., 69130 Ecully (FR)
(72) Inventeur: Blond, Laurent, 21200 Beaune (FR)
(74) Mandataire: Cémeli, Eric Philippe Laurent

(56) Documents cités:
- EP-A1- 1 726 881
- EP-A1- 1 729 065
- EP-A1- 2 187 130
- EP-A1- 2 442 025
- JP-A- 2008 014 516
- JP-A- 2010 038 403
- US-A1- 2006 225 726

## Description

La présente invention concerne le domaine technique des appareils électriques de chauffage et/ou de cuisson d'aliments à la vapeur.

La présente invention concerne notamment, mais non exclusivement, les appareils comportant un support de cuisson amovible par rapport à un dispositif de production de vapeur.

Il est connu du document DE 2 846 339 de réaliser un appareil électrique de cuisson à la vapeur dans lequel la vapeur est produite par un générateur de vapeur tubulaire. Toutefois le générateur de vapeur est alimenté en eau simplement par gravité à partir d'un réservoir d'eau. Ces dispositions ne permettent pas de contrôler la production de vapeur. De plus le réservoir d'eau est agencé sous l'enceinte recevant les aliments.

Il est connu du document WO 2011/150831 de réaliser un appareil électrique de cuisson à la vapeur comportant un générateur de vapeur alimenté en eau par l'intermédiaire d'une pompe. Toutefois ce générateur de vapeur est un générateur de vapeur tubulaire visant à produire de la vapeur surchauffée. De plus le générateur de vapeur est agencé dans le couvercle de l'appareil alors que la pompe est agencée dans un boîtier principal portant le couvercle.

Un appareil selon le préambule de la revendication 1 est connu du document EP2187130.

Un objet de la présente invention est de proposer un appareil électrique de chauffage et/ou de cuisson d'aliments à la vapeur, qui présente une construction économique et ergonomique.

Un autre objet de la présente invention est de proposer un appareil électrique de chauffage et/ou de cuisson d'aliments à la vapeur, qui produise rapidement un flux de vapeur bien adapté au chauffage et/ou à la cuisson des aliments.

Un autre objet de la présente invention est de proposer un appareil électrique de chauffage et/ou de cuisson d'aliments à la vapeur, qui présente un encombrement limité.

Ces objets sont atteints avec un appareil électrique de chauffage et/ou de cuisson d'aliments à la vapeur, comportant un réservoir d'eau présentant une ouverture supérieure, un dispositif de production de vapeur, et une enceinte pour contenir les aliments à chauffer et/ou à cuire, le dispositif de production de vapeur comportant un générateur de vapeur comprenant des moyens électriques de chauffe, une pompe alimentant en eau le générateur de vapeur à partir du réservoir d'eau, une sortie de vapeur alimentée en vapeur par le générateur de vapeur, l'enceinte étant alimentée en vapeur par la sortie de vapeur, le dispositif de production de vapeur étant agencé entre le réservoir d'eau et l'enceinte, du fait que l'enceinte comporte un couvercle mobile ou amovible, et que le couvercle couvre le réservoir d'eau et un compartiment présentant une ouverture supérieure. Cette disposition permet de simplifier la construction de l'appareil. Une telle disposition permet une réalisation simple, ergonomique et de construction économique. Une telle disposition permet de rassembler tous les éléments du dispositif de production de vapeur dans un même boîtier avec un cheminement simplifié de l'eau transformée en vapeur entre le réservoir d'eau et l'enceinte. Une construction économique et ergonomique peut ainsi être obtenue.

Selon un mode de réalisation avantageux, le dispositif de production de vapeur comporte un dispositif de commande pour contrôler la production de vapeur issue du générateur de vapeur, le dispositif de commande comportant des moyens de pilotage de débit contrôlant l'alimentation électrique de la pompe. Ainsi la pompe ne fonctionne pas nécessairement de manière continue et/ou à débit constant. Ces dispositions permettent de mieux contrôler la production de vapeur issue du dispositif de production de vapeur.

Avantageusement alors, le dispositif de commande comporte des moyens de pilotage de chauffe contrôlant l'alimentation électrique des moyens électriques de chauffe. Cette disposition permet de mieux contrôler la production de vapeur.

Avantageusement alors, les moyens de pilotage de chauffe comprennent un capteur de température agencé pour contrôler la température du générateur de vapeur. Cette disposition permet d'optimiser le contrôle de la production de vapeur et contribue à une meilleure durabilité de l'appareil.

Avantageusement encore, le dispositif de commande présente un programme de préchauffage dans lequel la pompe est à l'arrêt et dans lequel les moyens électriques de chauffe sont alimentés. Cette dispostion permet de monter plus rapidement en température le générateur de vapeur. De la vapeur adaptée pour chauffer et/ou cuire les aliments peut ainsi être obtenue plus rapidement.

Avantageusement alors, le programme de préchauffage prend en compte la température du générateur de vapeur au démarrage du programme de préchauffage. Cette disposition permet de différencier un démarrage à froid d'un démarrage à chaud après une utilisation récente.

Avantageusement encore, le dispositif de commande présente un programme de vidange dans lequel la pompe est à l'arrêt et dans lequel les moyens électriques de chauffe sont alimentés pour vaporiser l'eau restant dans le générateur de vapeur.

Avantageusement encore, le générateur de vapeur est agencé entre le réservoir d'eau et la sortie de vapeur. Cette disposition permet d'améliorer la compacité de l'appareil.

Avantageusement encore, l'appareil comporte un corps principal logeant le dispositif de production de vapeur, et le réservoir d'eau est amovible par rapport au corps principal, le réservoir d'eau comportant une sortie d'écoulement reliée à la pompe lorsque le réservoir d'eau est en place sur le corps principal, et la sortie d'écoulement étant obturée par un clapet lorsque le réservoir d'eau est retiré du corps principal. Ces dispositions permettent d'améliorer l'autonomie de l'appareil en facilitant le remplissage du réservoir d'eau.

Avantageusement encore, la pompe est agencée en dessous du générateur de vapeur. Cette disposition permet d'améliorer encore la compacité de l'appareil.

Avantageusement encore, la pompe est agencée entre le réservoir d'eau et la sortie de vapeur. Cette disposition permet d'améliorer encore la compacité de l'appareil.

Avantageusement encore, le générateur de vapeur présente une orientation au moins principalement verticale. Cette disposition permet également d'améliorer la compacité de l'appareil.

Selon un mode de réalisation avantageux, le générateur de vapeur est un générateur de vapeur tubulaire. En alternative, le générateur de vapeur pourrait notamment être formé par une chaudière.

Avantageusement alors, le générateur de vapeur tubulaire présente une configuration en U. Cette disposition permet également d'améliorer la compacité de l'appareil.

Selon une forme de réalisation avantageuse, le générateur de vapeur tubulaire comporte un élément chauffant blindé accolé à un tube de circulation de fluide. Une telle construction s'avère particulièrement économique.

Selon une forme de réalisation avantageuse, la sortie de vapeur débouche dans la partie supérieure de l'enceinte.

Avantageusement encore, l'enceinte loge au moins un support amovible pour recevoir les aliments. Si désiré, le compartiment peut loger au moins un support amovible.

Avantageusement alors, le support amovible comporte une poignée s'étendant à l'extérieur de l'enceinte. Cette disposition permet de faciliter le retrait des aliments portés par le support amovible, la poignée placée à l'extérieur de l'enceinte n'étant pas directement exposée à la vapeur.

L'invention sera mieux comprise à l'étude de deux exemples de réalisation, pris à titre nullement limitatif, illustrés dans les figures 1 à 4 annexées, dans lesquelles :
- la figure 1 est une vue schématique fonctionnelle d'un exemple de réalisation d'un appareil électrique de chauffage et/ou de cuisson d'aliments à la vapeur selon l'invention,
- la figure 2 est une vue en perspective de côté d'un exemple de réalisation d'un dispositif de production de vapeur et d'un réservoir d'eau amovible appartenant à un appareil électrique de chauffage et/ou de cuisson d'aliments à la vapeur selon l'invention tel qu'illustré sur la figure 1,
- la figure 3 est une vue en perspective de face du dispositif de production de vapeur et du réservoir d'eau amovible illustrés sur la figure 2, appartenant à un appareil électrique de chauffage et/ou de cuisson d'aliments à la vapeur selon l'invention tel qu'illustré sur la figure 1,
- la figure 4 est une vue schématique structurelle d'un autre exemple de réalisation d'un appareil électrique de chauffage et/ou de cuisson d'aliments à la vapeur selon l'invention.

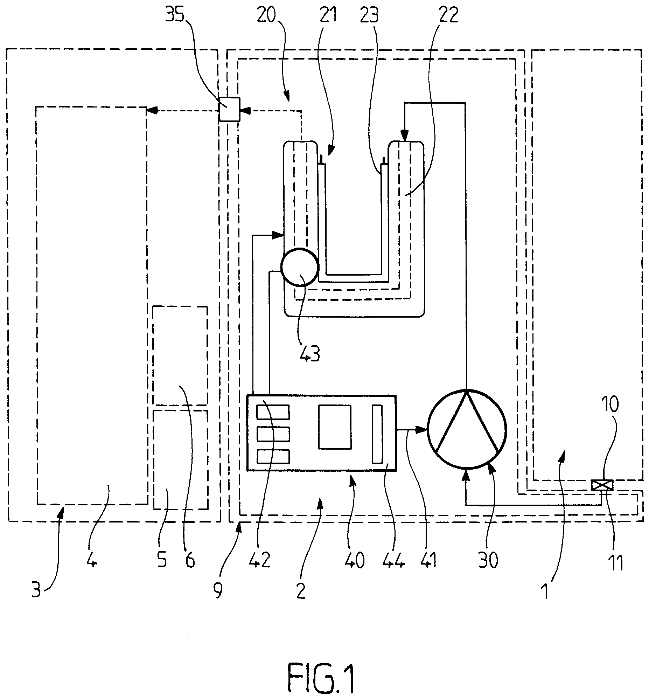

L'appareil électrique de chauffage et/ou de cuisson d'aliments à la vapeur illustré de manière schématique sur la figure 1 comporte un réservoir d'eau 1, un dispositif de production de vapeur 2, et une enceinte 3 pour contenir les aliments à chauffer et/ou à cuire.

Tel que représenté sur la figure 1, l'appareil comporte un corps principal 9 logeant le dispositif de production de vapeur 2. Si désiré, l'enceinte 3 peut être amovible par rapport au corps principal 9. L'enceinte 3 loge au moins un support amovible 4, 5, 6 pour recevoir les aliments. Le réservoir d'eau 1 est avantageusement amovible par rapport au corps principal 9. A cet effet, le réservoir d'eau 1 comporte une sortie d'écoulement 10 obturée par un clapet 11 lorsque le réservoir d'eau 1 est retiré du corps principal 9.

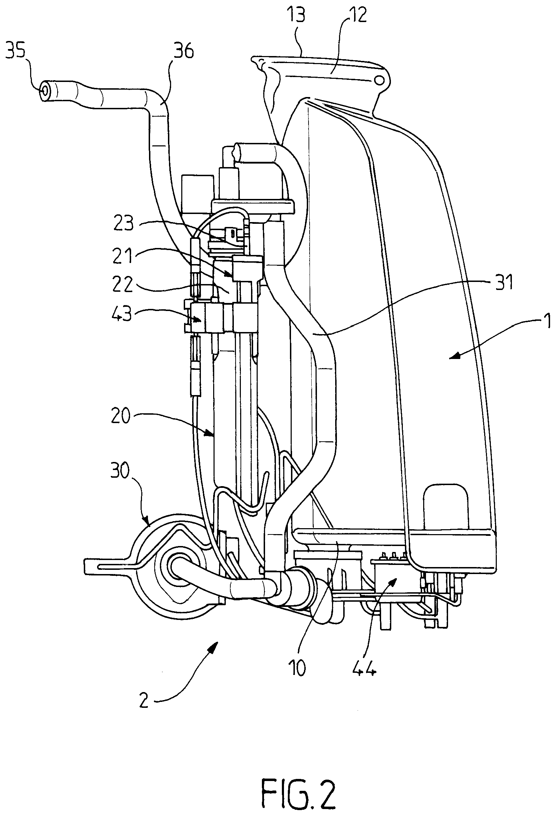

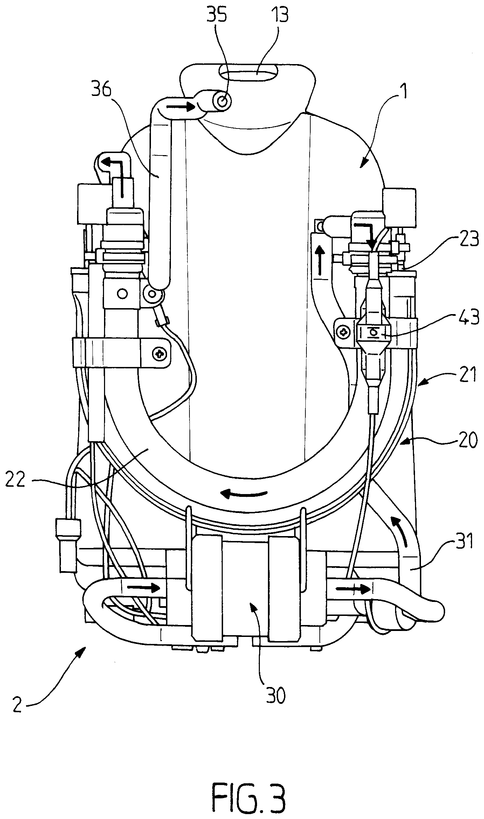

Un exemple de réalisation du dispositif de production de vapeur 2 est illustré sur les figures 2 et 3, sur lesquelles est également visible le réservoir d'eau 1 comportant une ouverture de remplissage 12 fermée par un capot 13. Le capot 13 est par exemple monté pivotant sur le réservoir d'eau 1.

Le dispositif de production de vapeur 2 comporte un générateur de vapeur 20 relié d'une part au réservoir d'eau 1 et d'autre part à l'enceinte 3.

Le générateur de vapeur 20 comprend des moyens électriques de chauffe 21. Avantageusement, le générateur de vapeur 20 présente une orientation au moins principalement verticale. Plus particulièrement selon l'exemple de réalisation illustré sur les figures, le générateur de vapeur 20 présente une orientation verticale. Les moyens électriques de chauffe 21 sont associés à un tube de circulation de fluide 22. Le générateur de vapeur 20 est ainsi un générateur de vapeur tubulaire. De préférence, le générateur de vapeur 20 tubulaire présente une configuration en U. Les extrémités du tube de circulation de fluide 22 sont ainsi agencées dans la partie supérieure du tube de circulation de fluide 22.

Le dispositif de production de vapeur 2 comporte une pompe 30 alimentant en eau le générateur de vapeur 20 à partir du réservoir d'eau 1. La pompe 30 est reliée au tube de circulation de fluide 22 par un tube d'amenée d'eau 31. La sortie d'écoulement 10 du réservoir d'eau 1 est reliée à la pompe 30 lorsque le réservoir d'eau 1 est en place sur le corps principal 9 de l'appareil.

Le dispositif de production de vapeur 2 comporte une sortie de vapeur 35 alimentée en vapeur par le générateur de vapeur 20. Le tube de circulation de fluide 22 est relié à la sortie de vapeur 35 par un tube d'évacuation de vapeur 36. L'enceinte 3 est alimentée en vapeur par la sortie de vapeur 35. La sortie de vapeur 35 débouche avantageusement dans la partie supérieure de l'enceinte 3.

Le dispositif de production de vapeur 2 comporte un dispositif de commande 40 pour contrôler la production de vapeur issue du générateur de vapeur 20. Le dispositif de commande 40 comporte des moyens de pilotage de débit 41 contrôlant l'alimentation électrique de la pompe 30. Le dispositif de commande 40 comporte des moyens de pilotage de chauffe 42 contrôlant l'alimentation électrique des moyens électriques de chauffe 21. De préférence, les moyens de pilotage de chauffe 42 comprennent un capteur de température 43 agencé pour contrôler la température du générateur de vapeur 20. Le capteur de température 43 est par exemple un capteur CTN. Le capteur de température 43 est de préférence agencé pour mesurer la température du tube de circulation de fluide 22. Si désiré, un autre capteur de température peut être agencé pour mesurer la température des moyens électriques de chauffe 21, afin d'éviter les échauffements excessifs du dispositif de production de vapeur 2. Le dispositif de commande 40 comporte une carte électronique 44 commandant l'alimentation électrique de la pompe 30 et des moyens électriques de chauffe 21. La carte électronique 44 est reliée au capteur de température 43.

Selon une forme de réalisation préférée, le dispositif de commande 40 présente un programme de préchauffage dans lequel la pompe 30 est à l'arrêt et dans lequel les moyens électriques de chauffe 21 sont alimentés. De préférence, les moyens électriques de chauffe 21 sont alimentés pour élever la température du générateur de vapeur 20 au dessus de 100°C avant l'introduction d'eau afin de vaporiser instantanément l'eau introduite dans le tube de circulation de fluide 22 sous l'action de la pompe 30.

Pour différencier un démarrage à chaud d'un démarrage à froid, le programme de préchauffage peut prendre en compte la température du générateur de vapeur 20 au démarrage du programme de préchauffage.

Egalement selon une forme de réalisation préférée, le dispositif de commande 40 présente un programme de vidange dans lequel la pompe 30 est à l'arrêt et dans lequel les moyens électriques de chauffe 21 sont alimentés pour vaporiser l'eau restant dans le générateur de vapeur 20.

Dans l'exemple de réalisation illustré sur les figures 2 et 3, le générateur de vapeur 20 tubulaire présente une orientation verticale. Le générateur de vapeur 20 est agencé entre le réservoir d'eau 1 et la sortie de vapeur 35. Le générateur de vapeur 20 tubulaire comporte un élément chauffant blindé 23 accolé au tube de circulation de fluide 22. L'élément chauffant blindé 23 forme les moyens électriques de chauffe 21. La pompe 30 est agencée en dessous du générateur de vapeur 20. La pompe 30 est agencée entre le réservoir d'eau 1 et la sortie de vapeur 35. La carte électronique 44 est logée dans le corps principal 9 en dessous du réservoir d'eau 1. De plus afin de limiter les échauffements, la carte électronique 44 est protégée du rayonnement direct des moyens électriques de chauffe 21.

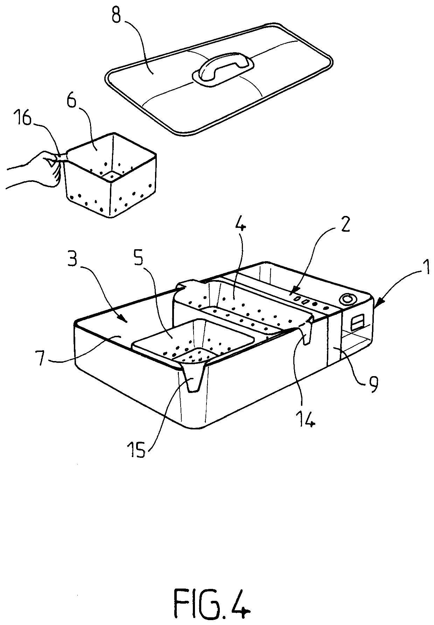

Dans l'exemple de réalisation illustré sur la figure 4, l'enceinte 3 comporte un couvercle 8 amovible. Le couvercle 8 couvre un compartiment 7 logeant les supports amovibles 4, 5, 6. Le compartiment 7 présente une ouverture supérieure. Les supports amovibles 4, 5, 6 peuvent comporter des poignées 14, 15, 16 s'étendant à l'extérieur de l'enceinte 3. Tel que bien visible sur la figure 4, chaque support amovible 4, 5, 6 comporte une poignée 14, 15, 16. L'enceinte 3 est formée dans le corps principal 9. Les poignées 14, 15, 16 s'étendent entre le couvercle 8 et le corps principal 9. Le couvercle 8 couvre également le réservoir d'eau 1. Le réservoir d'eau 1 présente une ouverture supérieure. Le réservoir d'eau 1 est avantageusement amovible par rapport au corps principal 9 logeant le dispositif de production de vapeur 2. A titre de variante, le couvercle 8 pourrait notamment être mobile, par exemple en étant monté pivotant sur le corps principal 9. A titre de variante, l'enceinte 3 peut être amovible par rapport au corps principal 9.

Les appareils électriques de chauffage et/ou de cuisson d'aliments à la vapeur illustrés sur les figures 1 à 4 fonctionnent et s'utilisent de la manière suivante.

Le générateur de vapeur 20 peut être préchauffé lorsque la pompe est à l'arrêt. Pour produire de la vapeur, l'eau provenant du réservoir d'eau 1 est injectée dans le tube de circulation de fluide 22 par la pompe 30. L'eau est alors chauffée par les moyens électriques de chauffe 21. La carte électronique 44 permet de contrôler le débit de la pompe 30 ainsi que l'alimentation électrique des moyens électriques de chauffe 21. La carte électronique 44 utilise également le capteur de température 43 pour réduire ou arrêter l'alimentation électrique des moyens électriques de chauffe 21 lorsqu'un seuil de température a été dépassé. Si désiré, plusieurs seuils de température peuvent être utilisés. Un ou plusieurs seuils de température de réalimentation à puissance partielle ou complète peuvent également être utilisés.

La production de vapeur est ainsi particulièrement rapide. Un flux de vapeur continu issu de la sortie de vapeur 35 peut être obtenu au bout de 10 secondes.

Plusieurs programmes de chauffe avec différents débits pour la pompe 30 peuvent être envisagés, en fonction des aliments à cuire ou du nombre de supports amovibles 4, 5, 6 présents dans l'enceinte 3.

Le générateur de vapeur 20 peut être vidé de son eau résiduelle en poursuivant l'alimentation des moyens électriques de chauffe 21 alors que la pompe 30 est à l'arrêt.

L'invention concerne également un procédé de pilotage d'un dispositif de production de vapeur 2 d'appareil électrique de chauffage et/ou de cuisson d'aliments à la vapeur, le dispositif de production de vapeur 2 comportant le générateur de vapeur 20 comprenant les moyens électriques de chauffe 21, la pompe 30 alimentant en eau le générateur de vapeur 20, la sortie de vapeur 35 alimentée en vapeur par le générateur de vapeur 20.

Ce procédé de pilotage comporte :
- une étape de préchauffage, dans laquelle la pompe 30 est à l'arrêt et dans laquelle les moyens électriques de chauffe 21 sont alimentés, pour monter en température le générateur de vapeur 20,
- une étape de chauffe, dans laquelle la pompe 30 est alimentée et dans laquelle les moyens électriques de chauffe 21 sont alimentés, pour produire de la vapeur afin de chauffer et/ou cuire les aliments à la vapeur,
- une étape de vidange, dans laquelle la pompe 30 est à l'arrêt et dans laquelle les moyens électriques de chauffe 21 sont alimentés, pour vaporiser l'eau restant dans le générateur de vapeur 20.

Un appareil électrique de chauffage et/ou de cuisson d'aliments à la vapeur comportant un dispositif de production de vapeur particulièrement performant peut ainsi être obtenu.

Selon une forme de réalisation préférée, le procédé précité utilise un générateur de vapeur 20 tubulaire.

La présente invention n'est nullement limitée à l'exemple de réalisation décrit et à ses variantes, mais englobe de nombreuses modifications dans le cadre des revendications.

## Revendications

1. Appareil électrique de chauffage et/ou de cuisson d'aliments à la vapeur, comportant un réservoir d'eau (1) présentant une ouverture supérieure, un dispositif de production de vapeur (2), et une enceinte (3) pour contenir les aliments à chauffer et/ou à cuire, le dispositif de production de vapeur (2) comportant un générateur de vapeur (20) comprenant des moyens électriques de chauffe (21), une pompe (30) alimentant en eau le générateur de vapeur (20) à partir du réservoir d'eau (1), une sortie de vapeur (35) alimentée en vapeur par le générateur de vapeur (20), l'enceinte (3) étant alimentée en vapeur par la sortie de vapeur (35), le dispositif de production de vapeur (2) étant agencé entre le réservoir d'eau (1) et l'enceinte (3), **caractérisé en ce que** l'enceinte (3) comporte un couvercle (8) mobile ou amovible, et **en ce que** le couvercle (8) couvre le réservoir d'eau (1) et un compartiment (7) présentant une ouverture supérieure.

2. Appareil électrique de chauffage et/ou de cuisson d'aliments à la vapeur selon la revendication 1, **caractérisé en ce que** le dispositif de production de vapeur (2) comporte un dispositif de commande (40) pour contrôler la production de vapeur issue du générateur de vapeur (20), et **en ce que** le dispositif de commande (40) comporte des moyens de pilotage de débit (41) contrôlant l'alimentation électrique de la pompe (30).

3. Appareil électrique de chauffage et/ou de cuisson d'aliments à la vapeur selon la revendication 2, **caractérisé en ce que** le dispositif de commande (40) comporte des moyens de pilotage de chauffe (42) contrôlant l'alimentation électrique des moyens électriques de chauffe (21).

4. Appareil électrique de chauffage et/ou de cuisson d'aliments à la vapeur selon la revendication 3, **caractérisé en ce que** les moyens de pilotage de chauffe (42) comprennent un capteur de température (43) agencé pour contrôler la température du générateur de vapeur (20).

5. Appareil électrique de chauffage et/ou de cuisson d'aliments à la vapeur selon l'une des revendication 2 à 4, **caractérisé en ce que** le dispositif de commande (40) présente un programme de préchauffage dans lequel la pompe (30) est à l'arrêt et dans lequel les moyens électriques de chauffe (21) sont alimentés.

6. Appareil électrique de chauffage et/ou de cuisson d'aliments à la vapeur selon la revendication 5, **caractérisé en ce que** le programme de préchauffage prend en compte la température du générateur de vapeur (20) au démarrage du programme de préchauffage.

7. Appareil électrique de chauffage et/ou de cuisson d'aliments à la vapeur selon l'une des revendications 2 à 6, **caractérisé en ce que** le dispositif de commande (40) présente un programme de vidange dans lequel la pompe (30) est à l'arrêt et dans lequel les moyens électriques de chauffe (21) sont alimentés pour vaporiser l'eau restant dans le générateur de vapeur (20).

8. Appareil électrique de chauffage et/ou de cuisson d'aliments à la vapeur selon l'une des revendications 1 à 7, **caractérisé en ce que** le générateur de vapeur (20) est un générateur de vapeur tubulaire.

9. Appareil électrique de chauffage et/ou de cuisson d'aliments à la vapeur selon la revendication 8, **caractérisé en ce que** le générateur de vapeur (20) tubulaire présente une configuration en U.

10. Appareil électrique de chauffage et/ou de cuisson d'aliments à la vapeur selon l'une des revendications 8 ou 9, **caractérisé en ce que** le générateur de vapeur (20) tubulaire comporte un élément chauffant blindé (23) accolé à un tube de circulation de fluide (22).

11. Appareil électrique de chauffage et/ou de cuisson d'aliments à la vapeur selon l'une des revendications 1 à 10, **caractérisé en ce que** l'enceinte (3) loge au moins un support amovible (4, 5, 6) pour recevoir les aliments, le compartiment (7) logeant ledit au moins un support amovible (4, 5, 6).

12. Appareil électrique de chauffage et/ou de cuisson d'aliments à la vapeur selon la revendication 11, **caractérisé en ce que** le support amovible (4, 5, 6) comporte une poignée (14, 15, 16) s'étendant à l'extérieur de l'enceinte (3).

## Patentansprüche

1. Elektrisches Gerät zum Erwärmen und / oder zum Kochen von Nahrungsmitteln mit Dampf, das einen Wassertank (1), der eine obere Öffnung aufweist, eine Dampferzeugungsvorrichtung (2) und ein Gehäuse (3) umfasst, um die Lebensmittel, die erwärmt und / oder gekocht werden sollen, zu enthalten, wobei die Dampferzeugungsvorrichtung (2) einen Dampfgenerator (20), der elektrische Heizmittel (21) aufweist, eine Pumpe (30), die Wasser zu dem Dampfgenerator (20) ausgehend von dem Vorratsbehälter (1) zuführt, einen Dampfauslass (35), zu dem Dampf durch den Dampfgenerator (20) zugeführt wird, aufweist, wobei zu dem Gehäuse (3) Dampf durch den Dampfauslass (35) zugeführt wird, wobei die Dampferzeugungsvorrichtung (2) zwischen dem Wassertank (1) und dem Gehäuse (3) angeordnet ist, **dadurch gekennzeichnet, dass** das Gehäuse (3) eine nicht abnehmbare oder abnehmbare Abdeckung (8) aufweist, und dass die Abdeckung (8) den Wassertank (1) und ein Fach (7) abdeckt, das eine obere Öffnung aufweist.

2. Elektrisches Gerät zum Erwärmen und / oder zum Kochen von Nahrungsmitteln mit Dampf nach Anspruch 1, **dadurch gekennzeichnet, dass** die Dampferzeugungsvorrichtung (2) eine Steuervorrichtung (40) zum Kontrollieren der Erzeugung von Dampf, das aus dem Dampfgenerator (20) kommt, umfasst, und dass die Steuervorrichtung (40) eine Vorrichtung zur Flussregelung (41) aufweist, die die Stromversorgung der Pumpe (30) kontrolliert.

3. Elektrisches Gerät zum Erwärmen und / oder zum Kochen von Nahrungsmitteln mit Dampf nach Anspruch 2, **dadurch gekennzeichnet**, das die Steuervorrichtung (40) Mittel zur Regelung der Heizung (42) umfasst, die die Stromversorgung der elektrischen Heizmittel (21) kontrollieren.

4. Elektrisches Gerät zum Erwärmen und / oder zum Kochen von Nahrungsmitteln mit Dampf nach Anspruch 3, **dadurch gekennzeichnet, dass** die Mittel zur Regelung der Heizung (42) einen Temperatursensor (43) umfassen, der eingerichtet ist, die Temperatur des Dampfgenerators (20) zu kontrollieren.

5. Elektrisches Gerät zum Erwärmen und / oder zum Kochen von Nahrungsmitteln mit Dampf nach einem der Ansprüchen 2 bis 4, **dadurch gekennzeichnet, dass** die Steuervorrichtung (40) ein Programm zur Vorheizung aufweist, in dem die Pumpe (30) angehalten ist, und in dem die elektrischen Heizmittel (21) versorgt werden.

6. Elektrisches Gerät zum Erwärmen und / oder zum Kochen von Nahrungsmitteln mit Dampf nach Anspruch 5, **dadurch gekennzeichnet, dass** das Programm zur Vorheizung die Temperatur des Dampfgenerators (20) beim Starten des Programms zur Vorheizung berücksichtigt.

7. Elektrisches Gerät zum Erwärmen und / oder zum Kochen von Nahrungsmitteln mit Dampf nach einem der Ansprüche 2 bis 6, **dadurch gekennzeichnet, dass** die Steuervorrichtung (40) ein Programm zur Entleerung aufweist, in dem die Pumpe (30) angehalten ist, und in dem die elektrischen Heizmittel (21) versorgt werden, um das restliche Wasser in dem Dampfgenerator (20) zu verdampfen.

8. Elektrisches Gerät zum Erwärmen und / oder zum Kochen von Nahrungsmitteln mit Dampf nach einem der Ansprüche 1 bis 7, **dadurch gekennzeichnet, dass** der Dampfgenerator (20) ein rohrförmiger Dampfgenerator ist.

9. Elektrisches Gerät zum Erwärmen und / oder zum Kochen von Nahrungsmitteln mit Dampf nach Anspruch 8, **dadurch gekennzeichnet, dass** der rohrförmige Dampfgenerator (20) eine U-förmige Gestalt aufweist.

10. Elektrisches Gerät zum Erwärmen und / oder zum Kochen von Nahrungsmitteln mit Dampf nach einem der Ansprüche 8 oder 9, **dadurch gekennzeichnet, dass** der rohrförmige Dampfgenerator (20) ein verschaltes Heizelement (23) umfasst, das an einem Rohr zur Zirkulation von Flüssigkeit (22) befestigt ist.

11. Elektrisches Gerät zum Erwärmen und / oder zum Kochen von Nahrungsmitteln mit Dampf nach einem der Ansprüche 1 bis 10, **dadurch gekennzeichnet, dass** das Gehäuse (3) mindestens eine abnehmbaren Träger (4, 5, 6) aufnimmt, um die Nahrungsmittel aufzunehmen, wobei das Abteil (7) den mindestens einen abnehmbaren Träger (4, 5, 6) aufnimmt.

12. Elektrisches Gerät zum Erwärmen und / oder zum Kochen von Nahrungsmitteln mit Dampf nach Anspruch 11, **dadurch gekennzeichnet, dass** der abnehmbare Träger (4, 5, 6) einen Griff (14, 15, 16) aufweist, der sich aus dem Gehäuse (3) erstreckt.

## Claims

1. Electrical device for heating and/or steam cooking of food, comprising a water reservoir (1) that has an upper opening, a steam generating device (2), and an enclosure (3) to contain the food to be heated and/or cooked, with the steam generating device (2) comprising a steam generator (20) comprising electrical heating means (21), a pump (30) supplying the steam generator (20) with water from the water reservoir (1), a steam outlet (35) supplied with steam by the steam generator (20), with the enclosure (3) being supplied with steam by the steam outlet (35), with the steam generating device (2) being arranged between the water reservoir (1) and the enclosure (3), **characterised in that** the enclosure (3) comprises a movable or removable cover (8), and **in that** the cover (8) covers the water reservoir (1) and a compartment (7) that has an upper opening.

2. Electrical device for heating and/or steam cooking of food according to claim 1, **characterised in that** the steam generating device (2) comprises a control device (40) in order to control the production of steam coming from the steam generator (20), and **in that** the control device (40) comprises means for controlling the flow rate (41) that controls the electrical power supply of the pump (30).

3. Electrical device for heating and/or steam cooking of food according to claim 2, **characterised in that** the control device (40) comprises means for controlling the heat (42) that controls the electrical power supply of the electrical heating means (21).

4. Electrical device for heating and/or steam cooking of food according to claim 3, **characterised in that** the means for controlling the heat (42) include a temperature sensor (43) arranged to control the temperature of the steam generator (20).

5. Electrical device for heating and/or steam cooking of food according to one of claims 2 to 4, **characterised in that** the control device (40) has a pre-heating program wherein the pump (30) is stopped and wherein the electrical means for heating (21) are powered.

6. Electrical device for heating and/or steam cooking of food according to claim 5, **characterised in that** the pre-heating program takes into account the temperature of the steam generator (20) at the starting of the pre-heating program.

7. Electrical device for heating and/or steam cooking of food according to one of claims 2 to 6, **characterised in that** the control device (40) has an emptying program wherein the pump (30) is stopped and wherein the electrical means for heating (21) are powered in order to vaporise the water remaining in the steam generator (20).

8. Electrical device for heating and/or steam cooking of food according to one of claims 1 to 7, **characterised in that** the steam generator (20) is a tubular steam generator.

9. Electrical device for heating and/or steam cooking of food according to claim 8, **characterised in that** the tubular steam generator (20) has a U-shaped configuration.

10. Electrical device for heating and/or steam cooking of food according to one of claims 8 or 9, **characterised in that** the tubular steam generator (20) comprises a shielded heating element (23) attached to a fluid circulation tube (22).

11. Electrical device for heating and/or steam cooking of food according to one of claims 1 to 10, **characterised in that** the enclosure (3) houses at least one removable support (4, 5, 6) for receiving the food, the compartment (7) housing said at least one removable support (4, 5, 6).

12. Electrical device for heating and/or steam cooking of food according to claim 11, **characterised in that** the removable support (4, 5, 6) comprises a handle (14, 15, 16) extending outside of the enclosure (3).
